# EUROPÄISCHE PATENTANMELDUNG

(11) **EP 2 044 862 A1**
(43) Veröffentlichungstag der Anmeldung: **08.04.2009**
(21) Anmeldenummer: 07019396.6
(22) Anmeldetag: 03.10.2007
(51) Int. Cl.: A47C 23/00

(54) **Federelement für Polster**

(71) Anmelder: Schwenk, Hans Ulrich, Dipl.-Ing., 72766 Reutlingen (DE)
(72) Erfinder: Schwenk, Hans Ulrich, Dipl.-Ing., 72766 Reutlingen (DE)

(57) **Zusammenfassung**

Um Federelemente I gleichmäßig weich federnd auszubilden, sind blattfederförmige Federglieder 2 vorgesehen, die im Grundriss erfindungsgemäß spiralig gewunden oder S-förmig oder Z-förmig sind und über eine Grundplatte 3, auf der sie angeordnet sind, seitlich und nach oben ansteigen und in einem Tragteller 4 münden. Die Federglieder 2 bestehen vorzugsweise aus elastischem Kunststoff. Um die Möglichkeit zum Durchfedern der Federglieder bei Belastung zu begrenzen, sind Mittel 14, 15/19; 20/21; 24; 31/32; 33/34; 38/43; 44; 48; 51 vorgesehen, die in unterschiedlich wirksame Stellungen bringbar sind und die Federglieder 2 versteifen. Ferner ist eine Möglichkeit angegeben, mittels deren Federelemente zu einer flächigen Auflagevorrichtung verbindbar sind.

## Beschreibung

### Gegenstand der Erfindung

Die Erfindung betrifft ein Federelement für Polster mit mindestens einem, sich zwischen einer Haltevorrichtung und einem Tragteller ansteigend erstreckendem, blattfederförmigem Federglied.

### Stand der Technik

Blattfederförmige Lagerelemente haben sich bei Liegemöbeln wie Betten zum nachgiebigen Lagern nicht nur von Latten in Unterbetten, sondern auch zum Auflegen von Matratzen bewährt. Derartige Federelemente sind bspw. in der DE 196 37 933 C1, der EP 1 386 564 B1 und der ES 1 535 541 A1 offenbart. Insbesondere die letztgenannte Druckschrift zeigt gerade, frei endende Blattfedern mit Tragtellern an ihren Enden zum nachgiebigen Lagern von Matratzen. Federelemente jeder Art weisen zwischen dem Einfedern unter Belastung und dem Rückfedern bei Entlastung unterschiedliche Kräfte, eine sogenannte Hysterese auf. In einem Krafl/Dehnungs-Diagramm stellt die Fläche zwischen diesen beiden Kennlinien ein Maß für die Lebendigkeit eines Federelementes dar. Bei Blattfedern aus Metall oder aus Kunststoff ist diese Federungshysterese im Gegensatz zu Federelementen aus Schaumstoff sehr groß, sie federn sehr leicht und mit nahezu gleicher Kraft zurück, mit der sie eingefedert sind.

Es sind auch schon Vorrichtungen bekannt, mittels deren die Steifigkeit von Federelementen erhöht werden kann. So zeigt die DE 196 37 933 C1 ein Federelement mit elliptischer Blattfeder, der keilförmige Auflagen zugeordnet sind. Durch Drehen des Federelementes kann sein Abstützen auf den Auflagen erreicht oder unterbunden werden. In der DE 20 2005 013 006 U1 ist ein Federelement mit zwei Federgliedern gezeigt, die sich beim Durchfedern annähern. In diesem Näherungsspalt kann ein blockierender Körper quer gestellt werden, der das Annähern der Federglieder beim Durchfedern unterbindet und sic dadurch versteift. Diese Druckschrift bezieht sich allerdings auf ein Endpunktlager für Federleisten.

### Allgemeine Beschreibung der Erfindung

Die Erfindung hatte sich die Aufgabe gestellt, ein derartiges Federelement mit Blattfedern aus Kunststoff zu fertigen und es an möglichst viele Erfordernisse eines Federelementes für Polsterungen anzupassen. Sie löst diese Aufgabe durch die im Kennzeichen des Hauptanspruchs genannten Merkmale.

Die erfindungsgemäßen Federelemente weisen mindestens ein, sich zwischen einer Haltevorrichtung und einem Tragteller seitlich der Haltovorrichtung ansteigend erstreckendes, blattfederförmiges Federglied, auf, das seine Richtung zwischen der Haltevorrichtung und dem Tragteller wiederholt ändert. Dieses Federelement kann die Form einer sich um etwa 360° windenden, von seiner Haltevorrichtung aus ansteigende und sich seitlich von dieser befindlichen Spirale aufweisen, annähernd zickzackförmig, oder Z-förmig sein und seitlich seiner Haltevorrichtung angeordnet sein.

Ein Federelement braucht nur ein Federglied aufzuweisen, es können aber auch zwei, drei oder vier Federglieder von ihm ausgehen. Auch die Vereinigung von mehr als vier Federgliedern an einem Federelement ist nicht ausgeschlossen. Zwei Federglieder an einem Federelement können einander in Bezug auf ihre beispielsweise als Tragleiste ausgebildete Haltevorrichtung gegenüberstehend angeordnet sein, wobei sie vorzugsweise spiegelbildlich ausgeführt sind. Sie können auch auf der selben Seite der Tragleiste hintereinander angeordnet sein. Vier Federglieder an einem Federelement bieten die Möglichkeit, die genannten Anordnungen zu kombinieren.

Dabei kann der Anstieg des Federgliedes von der Haltevorrichtung zum Tragteller mindestens 20 mm betragen.

Ein Federelement kann zwei Federglieder aufweisen, die in Bezug auf die Haltevorrichtung einander gegenüber liegend die in Bezug auf die Haltevorrichtung parallel zur Tragleiste oder angeordnet sind. Die Federelemente sind in Bezug auf eine als Tragleiste ausgebildete Haltevorrichtung vorzugsweise symmetrisch ausgebildet und angeordnet.

Um Federelemente bei Beschädigung oder dem Wunsch nach größerer oder geringerer Steifheit leicht austauschen zu können, ist eine leicht lösbare, bajonettartige Verbindung ihrer Tragplatte auf einer Haltevorrichtung vorgesehen.

Es kann mittels leicht in Eingriff bringbarer und leicht lösbarer Koppelglieder mit einer Haltevorrichtung oder mit einem anderen Federglied verbunden werden. Dabei kann das Koppelglied aus einer bajonettartigen Verbindung in Form einerseits eines hammerförmigen Sperrriegels und andererseits in Form einer Ausnehmung mit jeweils zwei, sich diametral gegenüber liegenden Sektoren unterschiedlichen Durchmessers bestehen. Das Koppelglied kann auch durch eine druckknopfartige Klippsverbindung gebildet werden.

Um die Stützwirkung eines Federelementes verändern zu können, sind Mittel vorgesehen, durch die der freie Federweg der Federglieder in unterschiedlichem Maße vermindert und sie dadurch versteift werden. Für diese Mittel schlägt die Erfindung eine Mehrzahl von vorteilhaften Gestaltungsmöglichkeiten vor. Es werden Lösungen erläutert, mittels deren die Steifigkeit mehrerer oder aller Federglieder eines Federelementes gemeinsam erhöht wird oder nur einzelner von mehreren Federgliedern eines Federelementes.

Das Federelement kann mit einer Einrichtung zum Begrenzen des Durchfederns des mindestens einen Federgliedes beim Belasten versehen sein, die aus Mitteln bestehen, mittels deren sich Federglieder auf einer ein Federelement tragenden Fläche, der Halteplatte oder einem dieser Fläche näher liegenden Abschnitt des Federelementes abstützen.

Diese Mittel können aus einem an der Haltevorrichtung oder an einem Halteglied auf einer Tragleiste für jedes von der Haltevorrichtung ausgehende Federglied angeordnetem, quer zur Richtung dessen Einfederns drehbar gelagertes Formstück mit mindestens zwei Auflagern unterschiedlicher Höhe für am Federglied angeordnete Stützzapfen bestehen.

Ein anderes Mittel ist dadurch gekennzeichnet, dass von der Haltevorrichtung eine ansteigende Rampe ausgeht, auf der ein Schieber einrastbar geführt ist, der mit zwei seitlichen Armen unter zwei sich gegenüber liegende Federarme greift und deren Federweg begrenzt.

Ebenso können Distanzstücke mit mindestens einer Nut vorgesehen sein, die in unterschiedlicher Stellung in ein Federglied einsteckbar sind und sich auf der Haltevorrichtung oder der Tragleiste abstützen. Dabei ist ein sich auf der Haltevorrichtung oder der Tragleiste abstützende Schieber unter ein Federglied verschiebbar.

Auch ein in der Haltevorrichtung drehbar gelagerter, in mehrere Stützstellungen unter Federelemente drehbar Stützbügel ist einsetzbar. Das Stützelement kann auch durch ein in einem Abschnitt eines Federgliedes einsetzbares, dessen Federkraft veränderbares Federmittel gebildet sein, das sich auf dem Tragelement des Federelementes abstützt.

Eine weitere Alternative sieht vor, dass auf dem Tragteller ein Stützteller drehbar gelagert ist, dessen Abstand zum Tragteller durch Stützstifte veränderbar ist, die durch Drehen des Stütztellers wechselweise auf dem Tragteller zur Auflage gebracht werden können.

Weiterhin kann vorgesehen sein, dass in einem Abschnitt eines Federgliedes ein Riegel derart drehbar gelagert ist, dass er sich mit einer auskragenden Fahne auf einen anderen Abschnitt des selben Armes auflegt und die Annäherung der beiden Abschnitte des Federarmes beim Durchfedern begrenzt.

Bei Federelementen mit spiralförmigen Federgliedern können unter den beiden Spiralen der Federglieder zwei Stützspiralen angeordnet sein, auf die sich die Spiralen auflegen können, wobei die Drehstellung der Stützspiralen und damit die erreichte Versteifung wahlweise veränderbar ist.

Alternativ können unter den Spiralen der Federglieder Stützen mit Treppen drehbar abgeordnet sein, auf die sich die Spiralen auflegen können, wobei die Drehstellung der Treppenstützen und damit die erreichte Versteifung wahlweise veränderbar ist.

Ein Federelement mit mindestens zwei Federgliedern können diese mit ihren Haltevorrichtungen zu einem Doppel-Federelement verbindbar sein. Ein solches Federelement kann mit Vorteil im Innern von Polstern eingesetzt werden.

Als Haltevorrichtung für die Federelemente können Tragleisten etwa eines Unterbettes dienen. Sie können aber auch auf einer flächigen Haltevorrichtung angeordnet sein, die sie auf einer glatten Fläche haltert. Solche Haltevorrichtungen sind für Campingeinrichtungen oder Boote vorteilhaft. Um dies zu erreichen, können Federglieder auf einem Tragglied mit drei oder mehr Tragarmen angeordnet werden, die mittels Verbindungslaschen zu einer flächigen Auflagevorrichtung verbindbar sind. Dabei sind drei Tragarme Y-förmig von einem Zentrum ausgehend um Winkel von 120° versetzt. Für den Randbereich eines Polsterelements können Tragglieder mit nur zwei Armen vorgesehen werden. Andere vorteilhafte Ausfnhrungsformen sind **dadurch gekennzeichnet, dass** die Tragarme in Form eines gleichseitigen Dreiecks, eines Vierecks oder allgemein eines symmetrischen Vielecks angeordnet sind. Von solchen rahmenförmigen Tragarmen erstrecken sich die Federelemente vorteilhafter Weise gegen das Innere des Rahmens.

Alternativ können die Federglieder auf einem einstückigen Gitternetz mit sich rechtwinklig oder Schief kreuzenden Gitterstegen angeordnet sein. Hierzu sind Verankerungsplatten vorgesehen, die auf einer Seite Haltemittel zum Eingriff in das Gitternetz, auf der anderen Seite Haltemittel zum Greifen der Federelemente aufweisen. Unter Verzicht auf die Verankerungsplatten können auch die Federelemente mit Zungen versehen sein, mittels deren sie Gitterstäbe umgreifen und sich an ihnen befestigen.

Die Federelemente können jedoch auch auf gelochten Streifen angeordnet sein, deren Löcher sie durchgreifen. Dabei werden die gelochten Streifen durch Abstandhalter auf Abstand gehalten, die ebenfalls aus gelochten Streiten bestehen können. Sie können jedoch auch durch Doppel-T-Stücke gebildet werden, die an den Enden ihrer T-Stücke in die Lochung der gelochten Streifen eingreifen.

### Spezielle Beschreibung der Erfindung

In den Figuren der Zeichnung sind Ausführungsbeispiele der Erfindung dargestellt. Es zeigen
- Fig. 1, 2, 3 und 25: Draufsichten auf drei Ausführungsformen eines Federelementes;
- Fig. 4: Befestigungsvorrichtungen eines Federelementes auf einer Tragleiste in Draufsicht;
- Fig. 5: die Einrichtung der Fig. 4 im Schnitt in Ebene A-A;
- Fig. 6: die Seitenansicht eines Federelementes gemäß Fig. 3 mit einer Einrichtung zum Versteifen seiner Federwirkung;
- Fig. 7: die Draufsicht auf Federglied-Abstützer an einem Federelement der Fig. 1;
- Fig. 8: die perspektivische Ansicht eines Federelementes mit auf die Federglieder aufklippabaren Abstützern;
- Fig. 9: die Ansicht eines Abstützers nach Fig. 8;
- Fig. 10: die Draufsicht auf ein Federelement mit durch Drehen höhenverstellbaren Tragtellern;
- Fig. 11: die Seitenansicht eines Endbereichs der Fig. 10 mit einem Tragteller;
- Fig. 12: die perspektivische Ansicht eines Federelementes mit Abstützfahnen;
- Fig. 13: die Ansicht eines als Abstützfahne ausgebildeten Abstützelementes nach Fig. 12;
- Fig. 14: die perspektivische Ansicht eines Federelementes mit drehbarem Stützbügel;
- Fig. 15: die Draufsicht auf das Federelement der Fig. 14;
- Fig. 16: die perspektivische Ansicht eines Federelementes mit veränderbar abstützbaren Federgliedern;
- Fig. 17: die Draufsicht auf eine Variante eines Federelementes nach Fig. 2;
- Fig. 18: die Draufsicht auf ein Doppelfederetement;
- Fig. 19: eine Einzelheit des Doppelfederelementes nach Fig. 18;
- Fig. 20: die Draufsicht auf eine weitere Ausführungsform eines Federelementes mit Abstützung;
- Fig. 21: das Federelement der Fig. 20 in Seitenansicht;
- Fig. 22: ein Federelement wie in Fig. 20 mit anderer Versteifungsvorrichtung;
- Fig. 23: das Federelement der Fig. 22 in anderer Stellung der Versteifungsvonichtung;
- Fig. 24: eine weitere Ausführungsform eines Federelementes in Draufsicht;
- Fig. 26: die Seitenansicht des Federelementes der Fig. 25 in Seitenansicht;
- Fig. 27: eine Abänderung des Federelementes der Fig. 25 in Draufsicht;
- Fig. 28: die Seitenansicht des Federelementes der Fig. 27 in Seitenansicht;
- Fig. 29: die Draufsicht auf eine flächige Anordnung einer Mehrzahl von Federelementen der Fig. 25/26 und 27/28;
- Fig. 30: eine perspektivische Ansicht des Gegenstandes der Fig. 29;
- Fig. 31: eine Variante eines Federelementes in Draufsicht;
- Fig. 32: das Federelement der Fig. 31 in Seitenansicht;
- Fig. 33: ein Koppelglied für die Federelemente der Fig. 31/32 in Draufsicht;
- Fig. 34: den Gegenstand der Fig. 33 in Seitenansicht;
- Fig. 35: die Draufsicht auf eine flächige Anordnung einer Mehrzahl von Federelementen der Fig. 32/33;
- Fig. 36: eine perspektivische Ansicht des Gegenstandes der Fig. 35;
- Fig. 37: eine weitere Variante eines Federelementes in Draufsicht;
- Fig. 38: das Federelement der Fig. 37 in Seitenansicht;
- Fig. 39: eine perspektivische Ansicht des Gegenstandes der Fig. 37;
- Fig. 40 bis 42: Ansichten eines Koppelgliedes für die Federelemente der Fig. 37 bis 39 aus verschiedenen Richtungen;
- Fig. 43: die perspektivische Ansicht einer flächige Anordnung einer Mehrzahl von Federelementen der Fig. 37 bis 39;
- Fig. 44: ein weiteres, rechteckiges Federelement in Draufsicht;
- Fig. 45: den Gegenstand der Fig. 44 in Seitenansicht;
- Fig. 46: die perspektivische Ansicht einer flächige Anordnung einer Mehrzahl von Federelementen der Fig. 44 und 45;
- Fig. 47: ein weiteres, sechseckiges Federelement in Draufsicht;
- Fig. 48: den Gegenstand der Fig. 47 in Seitenansicht;
- Fig. 49: die perspektivische Ansicht einer flächige Anordnung einer Mehrzahl von Federelementen der Fig. 47 und 48;
- Fig. 50: die Draufsicht auf ein in einem flächigen Gitter verankerten Federelement;
- Fig. 51: die perspektivische Ansicht auf den Gegenstand der Fig.50 von unten;
- Fig. 52: das Federelement der Fig. 50/51;
- Fig. 53 bis 56: ein Halteteller nach Fig. 50/51 in unterschiedlichen Ansichten;
- Fig. 57: eine Variante des Federelementes der Fig. 52;
- Fig. 58: einen Halteteller zum Verankern des Federelementes der Fig. 57;
- Fig. 59: ein Federelement zum Verankern in einem flächigen Gitter;
- Fig. 60: den Gegenstand der Fig. 59 in Seitenansicht;
- Fig. 61: eine Variante des Federelementes der Fig. 59 in Draufsicht;
- Fig. 62: den Gegenstand der Fig. 61 in Seitenansicht;
- Fig. 63: eine Variante der Ausführungsform der Fig. 61/62 in perspektivischer Untersicht
- Fig. 64: das Federelement der Fig. 63 in perspektivischer Ansicht
- Fig. 65: einen Abstandhalter;
- Fig. 66: zwei mittels des Abstandhalters der Fig. 65 beabstandete Lochstreifen
- Fig. 67: eine Hälfte eines verstellbaren Abstandhalters;
- Fig. 68: zwei verbundene Abstandhalter der Fig. 67;
- Fig. 69: die perspektivische Ansicht einer flächigen Anordnung von Federelementen in gelochten Streifen mit verstellbaren Abstandhaltern;
- Fig. 70: die Draufsicht auf den Gegenstand der Fig. 69.

Die Erfindung kann angewendet zum federnden Aufnehmen von Polsterelementen wie Matratzen auf Unterbetten oder auf glatten Flächen wie in Campingeinrichtungen, oder auch wie Sitzpolstern in Sesseln. Sie ist jedoch auch einsetzbar bei in solche Polsterelemente eingebauten Federelementen.

Unterbetten, für die der Erfindungsgegenstand vor allem vorgesehen ist, weisen rechteckige Rahmen aus Quer- und Längsholmen auf, wobei sich zwischen den Längsholmen eine Mehrzahl von Tragleisten erstrecken. Auf diesen Tragleisten sind Federelemente befestigt, die sich von den Tragleisten nach oben erstrecken und als nachgiebige Auflage für die Matratze dienen.

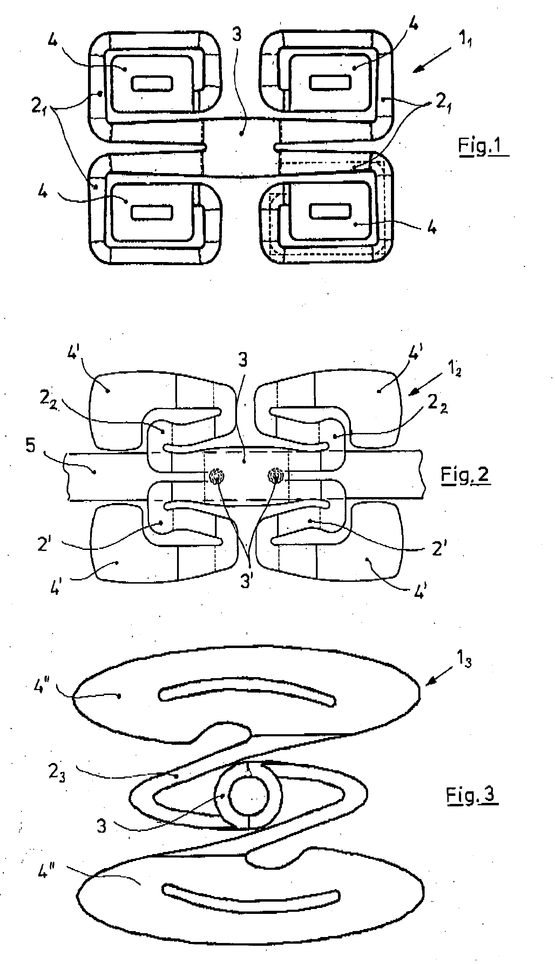

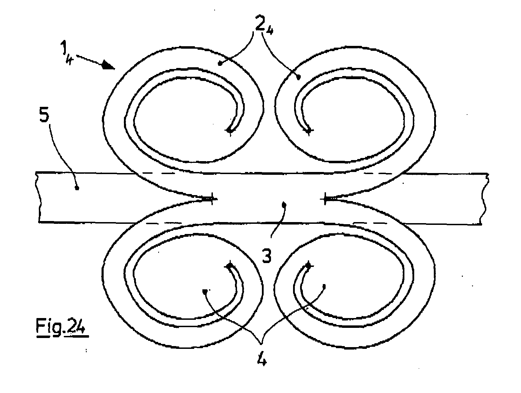

Die Federelemente 1₁, 1₂ 1₃ und 1₄ der Figuren 1, 2, 3 und 24 weisen ein oder mehrere blattfederartige Federglieder 2 (2₁, 2₂, 2₃, 2₄) auf, die von einer mittigen Halteplatte 3 ausgehen und von dieser aus ansteigen. Dabei ändern sie ihren Verlauf mehrfach: in Figur 1 und 24 spiralenähnlich, in Figur 2 zickzackförmig, in Figur 3 Z-ähnlich, jeweils ansteigend. Sie enden in einem flächigen Tragteller 4, 4', 4" . Der Anstieg der Federglieder 2 geht aus den seitlichen oder perspektivischen Ansichten der nachfolgend beschriebenen Figuren näher hervor. Der Anstieg beträgt etwa 20 mm bis 40 mm, er kann aber auch geringer oder noch höher sein.

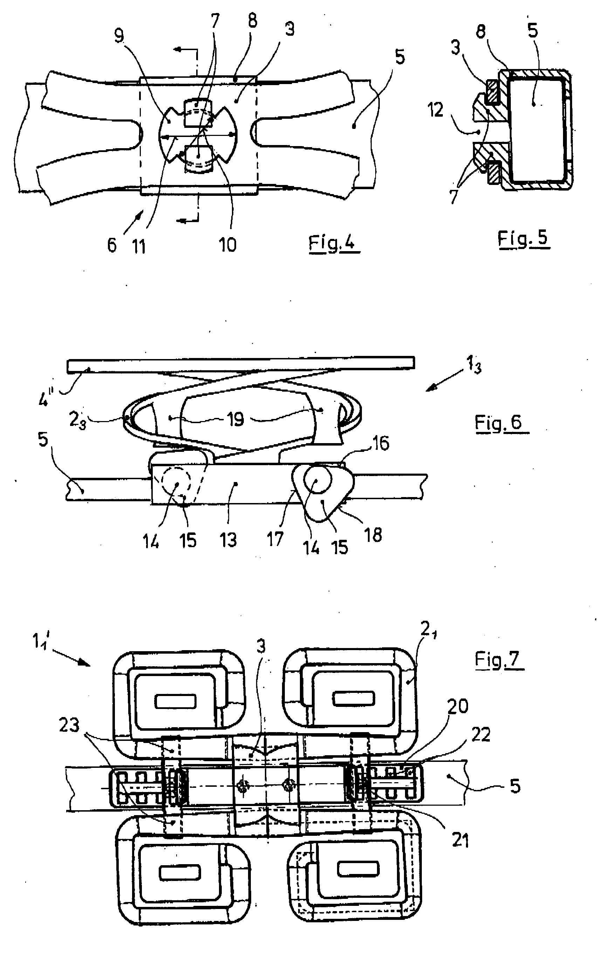

Der Drehsinn der spiralenähnlichen Federglieder 2 ist an einem Federelement 1 gemäß Figur 1 oder 7 an den beiden, diagonal angeordneten Federgliedern 2₁ gleichsinnig, an einander gegenüber stehenden oder hintereinander angeordneten Federgliedern entgegengesetzt. Entsprechendes gilt für die zickzackförmigen Federglieder 2₂ der Figur 2 und sinngemäß auch für die Federglieder 2₃ der Figur 3. Die spiralenähnlichen Federglieder 2₄ der Figur 24 verlaufen elliptisch, wie auch die Form der Federglieder 2₂ und 2₃ der Figuren 2 und 3 variiert werden können, ohne den Schutzbereich zu verlassen.

Für die Federelemente 1₁, 1₂, 1₃, 1₄ sind unterschiedliche Möglichkeiten ihres Befestigens an Traggliedern vorgesehen. In erster Linie kommt ein Befestigen an einer Tragleiste 5 in einem Unterbett in Frage, in dem die Federelemente eine aufliegende Matratze nachgiebig abstützen. Es ist jedoch auch möglich, die Federelemente auf einer bspw. gitterartigen Platte zu befestigen, die etwa im Campingzelt, im Campingwagen, im Campingboot oder dergleichen auslegbar ist. Auch ein Befestigen auf einer starren Platte ist möglich. Schließlich ist auch ein Verbinden zweier Federelemente in entgegengesetztem Richtungssinn möglich, die dann als Doppel-Federelemente in Polsterelemente einsetzbar sind.

In Figur 2 ist eine Befestigungsmöglichkeit dargestellt, bei der die Halteplatte 3 eines Federelementes 1₂ mit zwei Haltezapfen 3' versehen ist, die in die Tragleiste 5 einpressbar sind und das Federelement mit der Tragleiste verbinden.

Bevorzugt ist jedoch vorgesehen, eine bajonettartige Kupplung einzusetzen, die leicht zu verbinden und leicht zu lösen ist. Eine bevorzugte Ausführungsform einer solchen Bajonettverbindung 6 gemäß Figur 4 weist zwei hakenförmige Halteglieder 7 an einem auf einer Tragleiste 5 sitzenden Halter 8 und eine auf diese Halteglieder abgestimmte Ausnehmung 9 mit je zwei einander diametral gegenüberliegenden Bereichen 10 und 11 unterschiedlichen Durchmessers in der Halteplatte 3 eines Federelementes auf. Die Ausnehmung kann mit ihrem größeren Durchmesser über die hakenförmigen Halteglieder 7 gesteckt und durch Drehung um 90° an diesen verankert werden. Die in aller Regel in Kunststoff geformten Bauteile sind so elastisch, dass sie dabei in hemmende Reibverbindung kommen, es können aber auch zusätzliche Rasten zum Verankern vorgesehen werden.

Der Halter 8 weist hier auf der Oberseite einen Schlitz 12 auf, beiderseits dessen die Halteglieder 7 angeordnet sind. Dies hat den Vorteil, dass der Schlitz beim Aufdrehen der Halteplatte 3 auf die Halteglieder zusammengezogen und den Halter 8 unverrückbar auf der Tragleiste 5 befestigt wird.

In einer anderen Ausführungsform kann ein druckknopfartiges Koppelglied zum Einsatz kommen.

Um die Nachgiebigkeit einzelner oder mehrerer Federglieder 2 - wie dies häufig erwünscht ist - an individuelle Bedürfnisse anpassen zu können, sind unterschiedliche Möglichkeiten vorgesehen.

In Figur 6 ist eine Versteifungsvorrichtung an einem Federelement 1₃ ähnlich dem der Figur 3 dargestellt. Sie besteht aus je einem, jedem der beiden Federglieder 2₃ zugeordneten Exzenter 15, der um einen am Halter 13 angeordneten Zapfen 14 drehbar ist und drei Auflageflächen 16, 17, 18 mit unterschiedlichen Abständen zu seiner Drehachse hat. Die Exzenter sitzen unter jeweils einem Stützzapfen 19 an den beiden Federgliedern 2₃. Je nach Drehstellung eines Exzenters 15 legt sich der Stützzapfen bei Belastung früher oder später auf eine Auflagefläche 16, 17 oder 18 des ihm zugeordneten Exzenters auf und stützt sich auf ihm unter Verminderung seines möglichen Federweges und damit unter Versteifung ab.

Das vom Federelement der Figur 1 abgeleitete Federelement 1₁' der Figur 7 weist zwei von seiner Halteplatte 3 ausgehende, sich auf der Tragleiste 5 abstützende Rampen 20 auf, entlang deren jeweils ein Stützschieber 21 in unterschiedlichen Rasten 22 verstellbar ist. Die Stützschieber sind mit zwei Arme 23 versehen, die unter zwei einander gegenüber stehende Arme je zweier Federglieder 2₁ greifen und deren Federweg begrenzen. Er vermindert so deren Durchfedern unter Belastung und versteift die beiden Federglieder. Die Rampen 20 können über die Tragleiste 5 ansteigen und in sich federnd sein.

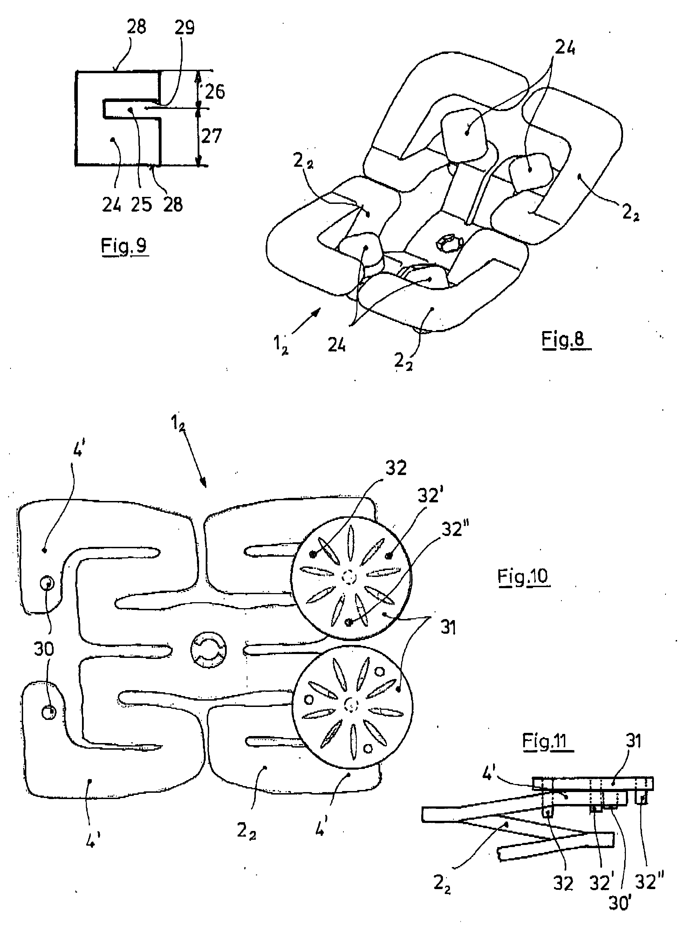

In der Ausführungsform der Figuren 8 und 9 sind Stützelemente 24 vorgesehen, die an den Wendepunkten der Federglieder 2₂ eines Federelementes 1₂ gemäß Figur 2 einsteckbar sind und sich beim Durchfedern des Federelementes auf dessen Unterlage wie etwa die Tragleiste 5 auflagern. Sie begrenzen so den Federweg der Federelemente. Die Stützelemente können Steckschlitze 25 in unterschiedlichen Abständen 26, 27 zu ihren Auflageflächen 28 aufweisen, so dass unterschiedliche Stützhöhen erreichbar sind. Die Steckschlitze können mit Nasen 29 versehen sein, die die Stützelemente 24 auf den Federgliedern sichern.

Derartige Stützelemente können auch auf die von der Halteplatte 3 ausgehenden, sich über einer Tragleiste 5 befindlichen Abschnitte der Federglieder 2₁, 2₂ aufgeschoben werden. Dort können sie durch Leisten auf den Federgliedern gegen seitliches Verschieben gesichert werden und können auch durch Noppen in ihren Schlitzen, die in entsprechende Vertiefungen in den Federgliedern greifen, gegen Herausfallen gesichert werden.

Die Figuren 10 und 11 zeigen ein Federelement 1₁ ähnlich dem der Figur 2, bei dem den Tragtellern 4' mittels Lagerzapfen 30' in Lagern 30 drehbare Zusatzteller 31 zugeordnet sind. Aus diesen Zusatztellern ragen nach unten beispielsweise drei Stifte 32, 32', 32" unterschiedlicher Länge heraus, von denen sich je nach Drehstellung eines Zusatztellers keiner oder einer auf den Tragteller 4' auflegt und damit die Höhe des Zusatztellers 31 über dem Tragteller erhöht. Damit wird der Federweg, um den das betreffende Federglied bei bestimmter Belastung niedergedrückt wird, erhöht und damit auch dessen Gegenkraft. In Abwandlung dazu können sich diese Stifte auch auf benachbarte Bereiche der Federglied 2₂ abstützen wodurch die Federrate des Federelements einstellbar ist.

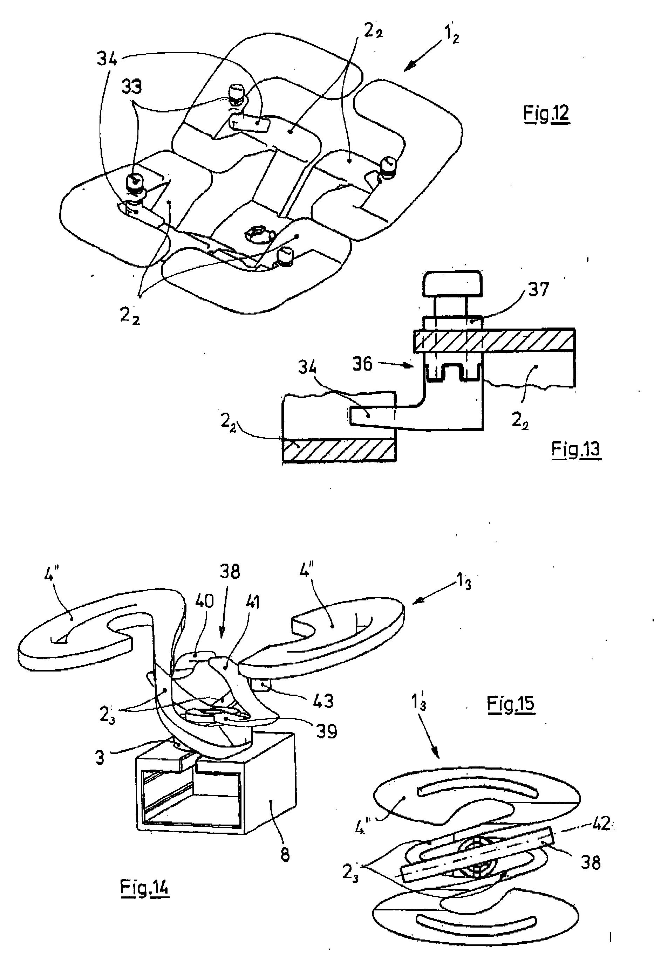

In den Figur 12 und 13 dargestellte, drehbare Riegel 33 legen sich mit Fahnen 34 in Eingriffstellung auf benachbarte Bereiche der Federglieder 2₂ auf und bewirken so eine Begrenzung deren Federwege. Die Riegel sind in unterschiedliche Winkelstellungen zu bringen, indem ihre Naben nach unten aus einer Verzahnung 36 ihrer Lagerbüchse 37 absenkbar und in anderer Winkelstellung wieder einrastbar sind. Dadurch können sie auch außer Eingriff mit benachbarten Bereichen der Federglieder gebracht werden.

In den Figuren 14 und 15 ist ein Federelemente 1₃ nach Figur 3 mit einer Einrichtung zum Versteifen dargestellt, die aus einem von der Seite betrachtet annähernd olliptischen Stützbügel 38 besteht, der mittels eines Schwenkzapfens in einer Bohrung in der Halteplatte 3 des Federelementes drehbar ist. In kinematischer Umkehr kann auch die Halteplatte einen Schwenkzapfen aufweisen, auf dem der Stützbügel drehbar ist.

Der Stützbügel 38 weist einen unteren, auskragenden Ast 39 auf, von dessen Enden zwei obere, sich einwärts wendende Äste 40 und 41 ausgehen. Dieser Stützbügel kann in unterschiedliche Stellungen gedreht werden.

In der Stellung 42 der Figur 15 steht der Stützbügel 38 zwischen den beiden Federgliedern 2₃ des Federelements 1₃ und wirkt nicht stützend auf dieses ein. In um etwa 45° gegen den Uhrzeigersinn gedrehter Stellung gelangen die äußeren, tiefer liegenden Bereiche seiner Äste 40, 41 unter Stütznocken 43 unter den Federgliedern 2₃, so dass sich diese beim Durchfedern auf diese Äste auflegen und ihr Federweg dadurch eingeschränkt wird. In um etwa 90° gedrehter Stellung schließlich ragen die inneren Bereiche der Äste 40, 41 bis dicht unter die Federglieder 2" und stützen diese schon bei geringem Federweg ab.

Die Stütznocken 43 haben auch die Funktion, den Stützbügel 38 in seiner Stellung zu sichern. Alternativ kann der Stützbügel 38 mit Noppen versehen sein, die in Aussparungen in der Halteplatte 3 eingreifen und ihn in der gewählten Stellung halten. Stützbügel dieser Art können auch an Federelementen mit vier Federgliedern 1₁ und 1₂ der Figuren 1, 2, 17 und 24 eingesetzt werden. Sie können dann kreuzförmig ausgeführt sein, um alle vier Federglieder zu unterstützen.

Es versteht sich, dass die Federkraft des Stützbügels 38 durch die Bemessung seiner Äste 39, 40, 41 wählbar ist. In Figur 14 ist er im übrigen mit geteilten oberen Ästen 40, 41 dargestellt. Hierbei wird die Wirkung erreicht, dass ein Einfedern eines Federgliedes 2₃ sich nicht auf das andere Federglied auswirkt. Wenn die beiden oberen Ästen 40, 41 dagegen wie in Figur 15 angedeutet verbunden sind, wirkt sich ihre vereinte Federkraft und ihr Einfedern auf beide Federglieder 2₃ aus.

Es können wie nicht näher dargestellt auch zwei gesonderte Stützbügel vorgesehen sein, die jeweils nur einseitig auskragen und in zwei ineinander geführten Lagerzapfen gelagert sind. Mittels solcher Stützbügel können die beiden Federglieder 2₃ eines Federelementes 1₃ unabhängig voneinander versteift werden.

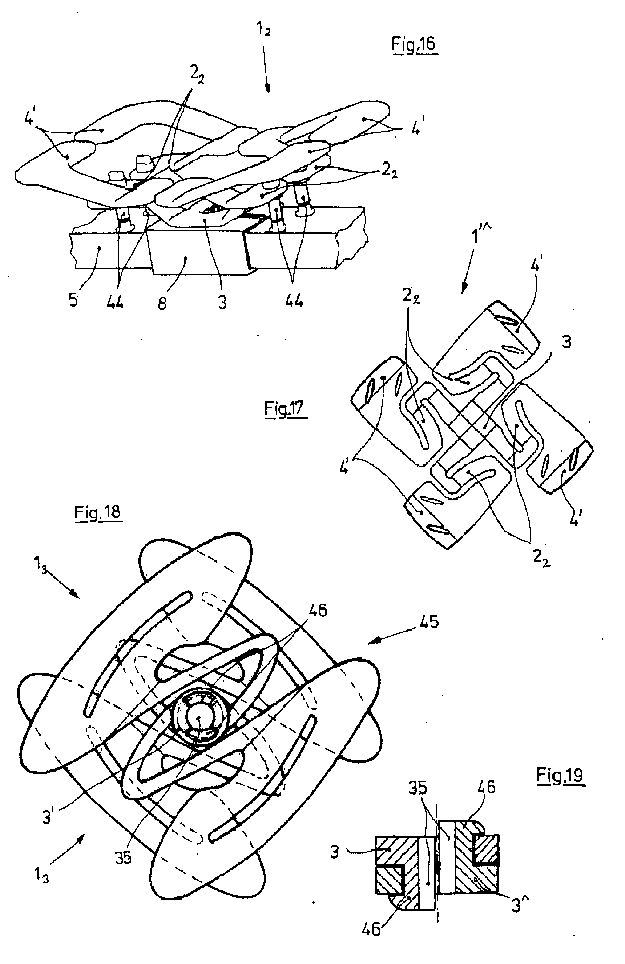

Nach Figur 16 sind in die Federglieder 2₂ eines Federelements 1₂ gemäß Figur 2 Stützstifte 44 mit Schraubengängen eingefügt, die je nachdem, wie weit sie eingedreht werden, unterschiedlich weit nach unten herausragen. Sie legen sich daher beim Durchfedern ab einem bestimmten, einstellbaren Federweg auf die Unterlage, die Tragleiste 5 des Federelementes auf und begrenzen so ebenfalls den Federweg der Federglieder.

Figur 17 zeigt eine Variante eines Federelementes 1₁ nach Figur 2, bei der die gleichsinnig orientierten Federglieder 2₂ um jeweils 90° versetzt an ihrer Halteplatte 3 angeordnet sind. Es versteht sich, dass auch nur drei oder aber mehr als vier Federglieder in gleichen Winkeln gegeneinander versetzt angeordnet werden können. Dabei können sich die Federglieder 2₂ auch spiralförmig nach oben winden wie die Federglieder 2₁ und 2₄ der Figuren 1 und 24.

In Figur 18 ist ein Beispiel eines Doppel-Federelementes 45 zum Einbau in Polsterelemente dargestellt. In der Darstellung wird von einem Federelement der in Figur 3 gezeigten Form ausgegangen. Das Doppelfederelement 45 weist zwei identische, axial miteinander verbundene Einzel-Federelemente 1₃ auf, die einander entgegengesetzt nach oben und nach unten orientiert sind.

Um die beiden Einzel-Federetemente 1₃ miteinander zu verbinden, sind ihre Halteplatten 3,3^ mit diagonal versetzten, hakenförmigen Durchgriffen 46 versehen, die durch Löcher 35 in den beiden Halteplatten steckbar sind und die Ränder diese Löcher wechselweise hintergreifen. Beide Halteplatten weisen gleiche Durchgriffe auf, die bei um 90° verdrehten Federelemente 1₃ ineinander steckbar sind und die beiden Federelemente miteinander verbinden. In Figur 19 ist die Koppelung der beiden Halteplatten 3 und 3^ im Schnitt dargestellt, die Schnittebenen durch die beiden Durchgriffe 46 sind um 90° versetzt gezeichnet.

Die Verbindung zweier Federelemente zu einem Doppel-Federelement kann auch mit den anderen Federelementen 1₁, 1₂,1'^ und 1₄ der Figuren 1, 2, 17 und 24 verwirklicht werden. Anstelle der Durchgriffe 46 können zwei Federelemente auch mittels einer druckknopfartigen Klippsvorrichtung miteinander verbunden werden. An deren Stelle kann jedoch auch ein separates, zusätzliches Halteelement eingesetzt werden.

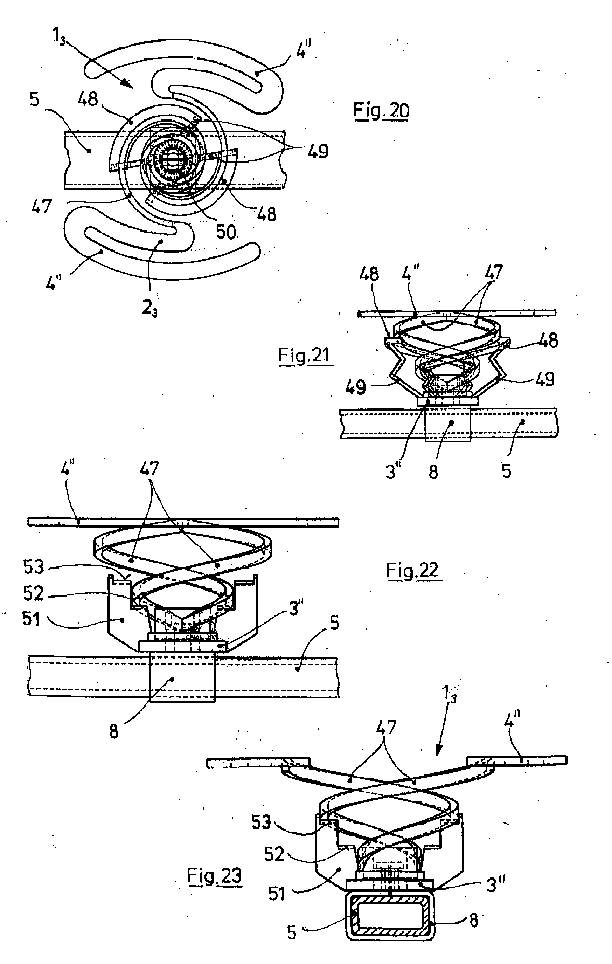

In den Figuren 20 bis 23 ist eine weitere vorteilhafte Möglichkeit zum Versteifen von Federgliedern eines Federelementes dargestellt.

In Figur 20 weist das Z-ähnliche Federelement 1₃ etwa nach Figur 3 zwei Federglieder 2₃ auf, die auf größerer Länge konzentrisch zueinander spiralförmig verlaufen und wie oben beschrieben in Tragtellern 4" enden. Unter den Spiralen 47 dieser Federglieder sind zwei weitere, einstückige, zu den Spiralen 47 gleich laufende, ansteigende Stützspiralen 48 auf federnden Traggliedern 49 gelagert, deren Drohstellung veränderbar und blockierbar ist. Sie gehen von einer drehbaren Halteplatte 3" aus, die auf dem Halter 8 mittels einer Rasterung 50 in gewählter Stellung gehalten ist.

Beim Durchfedern unter Belastung legen sich die Spiralen 47 der Federglieder 2₃ auf die Stützspiralen 48 auf und versteifen die Federglieder. Ab welchem Federweg diese Versteifung erfolgt und wie wirksam sie demgemäss ist, ist durch die einstellbare Drehstellung der Stützspiralen wählbar.

In der Ausführungsform der Figuren 22 und 23 sind die Stützspiralen durch starre Stützen 51 mit je zwei Treppenstufen 52 und 53 auf beiden Seiten ersetzt, auf die sich die Spiralen 47 auflegen und versteift werden.

In Figur 22 ist eine Stellung gezeichnet, bei der sich die Spiralen 47 mit ihrem Anfangsbereich auf die unteren Treppenstufen 52 auflegen können. Der obere Bereich der Spiralen liegt auf einem Radius vom Zentrum, der außerhalb der oberen Treppenstufen 53 liegt, so dass sie sich nicht auf diese auflegen. Wenn die getreppte Stütze 51 um etwa 90° gegen den Uhrzeigersinn in die in Figur 23 gezeichnete Stellung verdreht wird, kommen die oberen Treppenstufen 53 in den Radius der Spiralen 47 in deren mittleren Bereichen und diese legen sich auf diese Treppenstufen auf.

Während mittels der Härtestellvorrichtungen der Figur 7, der Figur 14/15 mit durchgehendem Stützbügel 38 und der Figuren 20 bis 23 die Nachgiebigkeit jeweils zweier einander gegenüber stehender Federglieder 2₁, 2₃ gemeinsam verstellt werden, wirken die Härtestellvorrichtungen der Figuren 6, 8/9, 10/11, 12/13 und 14/15 mit geteiltem Stützbügel individuell auf jeweils nur ein Federglied.

Der Querschnitt der Federglieder 2, ihre Länge, die Elastizität ihres Materials und weitere Parameter sind so gewählt, dass mit ihnen die angestrebte Federwirkung erreicht wird. Die Federwirkung wird weich gewählt, sie kann durch die Versteifungsvorrichtungen bei Bedarf härter gemacht werden. Bevorzugt bestehen die Federelemente 1 aus einstückigen Kunststoft-Spritzgussteilen. Die Federglieder bestehen aus flachem Kunststoffprofil. Die Federelemente und ihre Federglieder können jedoch auch aus Stahlblech gefertigt sein.

Die Federelemente 1 sind in der Regel mit zwei oder vier Federgliedern 2 ausgestattet, die sich paarweise in Bezug auf die Tragleiste 5 gegenüberstehen. Federgliederpaare können auch entlang der Tragleiste angeordnet sein. Es ist jedoch auch möglich, dass Federelemente der in Figur 1 und 2 gezeigten Form nur zwei einander in Bezug auf die Tragleiste 5 gegenüber stehende Federglieder besitzen. Dies kommt insbesondere dann in Frage, wenn die Federelemente im Unterbett gegeneinander versetzt angeordnet sind und neben den Längsholmen nur "halbe" Federelemente auf den Tragleisten 5 untergebracht werden können.

Federelemente der beschrieben Art sollen häufig auch im Campingsektor wie beim Zelten, in Wohnwagen, Wohnmobilen und in Booten eingesetzt werden, in denen keine Unterbetten mit Tragleisten zur Verfügung stehen. Dort sollen die Federelemente auf glatten, meist ebenen Flächen aufliegen.

Um dies zu ermöglichen, werden quasiendlose, in der benötigten Abmessung abgelängte, flach Streifen aus (stranggepresstem) Kunststoff vorgeschlagen, die in ihrer Längsmitte mit einer Spur von Perforationen in geringem Abstand versehen sind. In diesen Perforationen können die Federelemente mittels harpunenförmiger Dübel befestigt werden. Sie können aber auch die Ränder der Streifen klippsartig umfassen oder harpunenförmige Zapfen aufweisen, die in die Löcher der Perforation eingreifen.

Der geringe Abstand zwischen den Perforationen erlaubt es, den gegenseitigen Abstand der in die Streifen eingesetzten Federelemente oder einzelner Federglieder beispielsweise am Rande einer flächigen Zusammenstellung der Streifen zu vergrößern, um dort eine höhere Nachgiebigkeit zu erreichen. Falls die in der Funktion den Latten eines Unterbettes ähnlichen Streifen quer zur Längsachse eines Liegenden angeordnet sind, können im Schulterbereich und im Beckenbereich mehr Federelemente angeordnet werden als in den übrigen Bereichen.

Um den korrekten gegenseitigen Abstand der Streifen zu sichern, können identische Streifen quer auf die die Federelemente enthaltenden Streifen aufgelegt werden und mittels der Harpunendübel mit diesen verbunden werden. Auch hierbei erlaubt der geringe Abstand der Perforationen, die die Federelemente enthaltenden Streifen im Schulterbereich und im Beckenbereich enger anzuordnen als in den übrigen Bereichen.

Alternativ können auch doppel-T-förmige Abstandhalter vorgesehen sein, die an den Enden ihrer T-Köpfe Löcher oder Zapfen aufweisen, über die sie mit Doppelharpunendübeln in die Löcher der Perforationen eingreifen. Auf diese Weise wird eine verschiebfeste Verbindung der die Federelemente enthaltenden Streifen erreicht. Es können Abstandhalter mit unterschiedlicher Länge vorgesehen sein, mittels deren der gegenseitige Abstand der Streifen an die Erfordernisse angepasst werden kann.

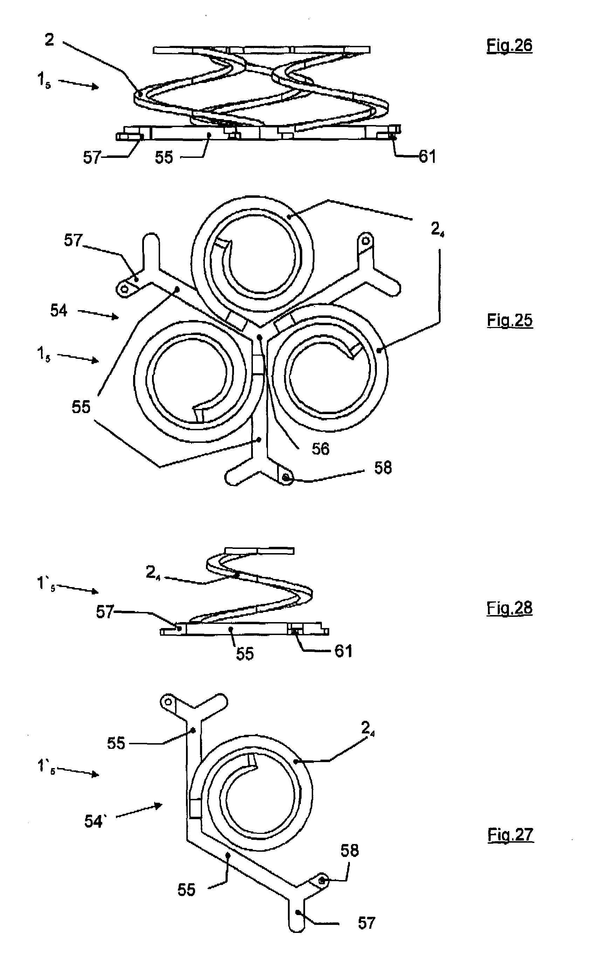

Eine Variante für die Halterung der Federglieder 2₄ besteht gemäß den Figuren 25 bis 30 darin, sie auf Y-förmigen Traggliedern 54 anzuordnen, die Tragarme 55 aufweisen, die um gegenseitigen Winkelabstand von 120° strahlenförmig von einem Zentrum 56 ausgehen. Es entstehen so dreiarmige Federelemente 1₅. Die Tragarme enden in Koppelglieder 57, mittels deren sie untereinander verbindbar sind. Diese Koppelglieder können Löchern 58 aufweisen, durch die Doppelharpunendübel steckbar sind. Die Federglieder 2₄ können auf den Tragarmen 55 befestigt (schweißverbunden) oder einstückig mit den Traggliedern 54 sein.

In manchen Fällen kann es vorteilhaft sein, an den Federelementen 1₅, 1'₅ die Tragarme entfallen zu lassen und sie an ihrer mit 56 bezeichneten Vereinigungsstelle, die in diesem Falle die Halteplatte darstellt, auf einer festen Unterlage bspw. mittels Haltebolzen und / oder eines Schraubelementes zu befestigen. So kann aus einer Mehrzahl von Federelementen eine hinsichtlich ihrer Form und ihrer Bastückungsdichte sehr variable flächige Anordnung gebildet werden.

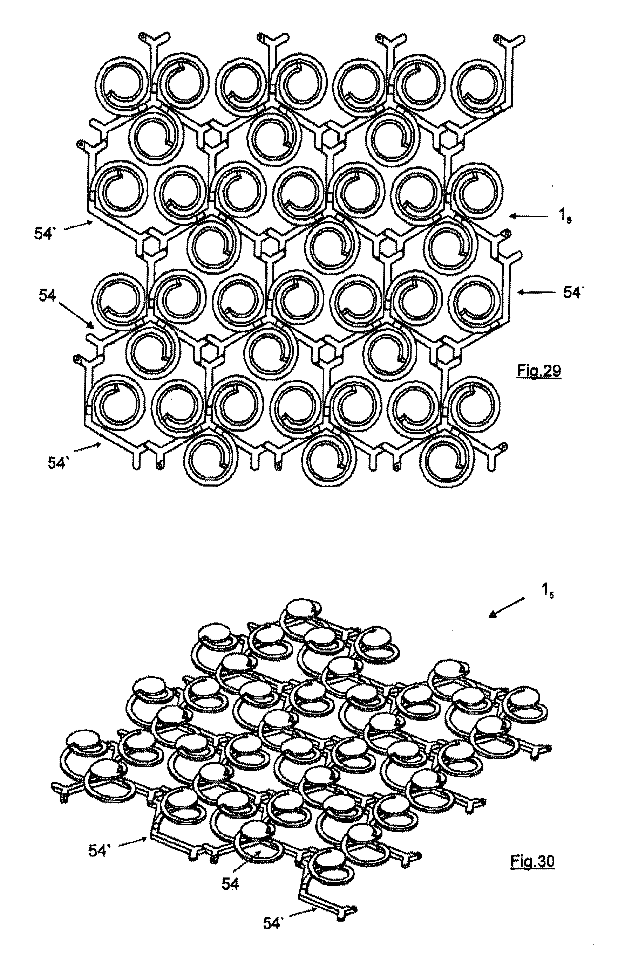

Für den Randbereich einer flächigen Anordnung gemäß den Figuren 29 und 30 können Tragglieder 54' mit nur zwei Tragarmen 55 gemäß den Figuren 27 und 28 vorgehalten werden. Die Federglieder 2₄ der Federelemente 1₅ sind gleichgerichtet im oder gegen den Uhrzeigersinn von der Tragarmen 55 ausgehend angeordnet, so dass sich - wie aus Figur 29 erkennbar - eine gleichmäßige Unterstützung einer auf die aus einer Vielzahl von Federelementen bestehenden Unterlage aufgelegten Matratze ergibt.

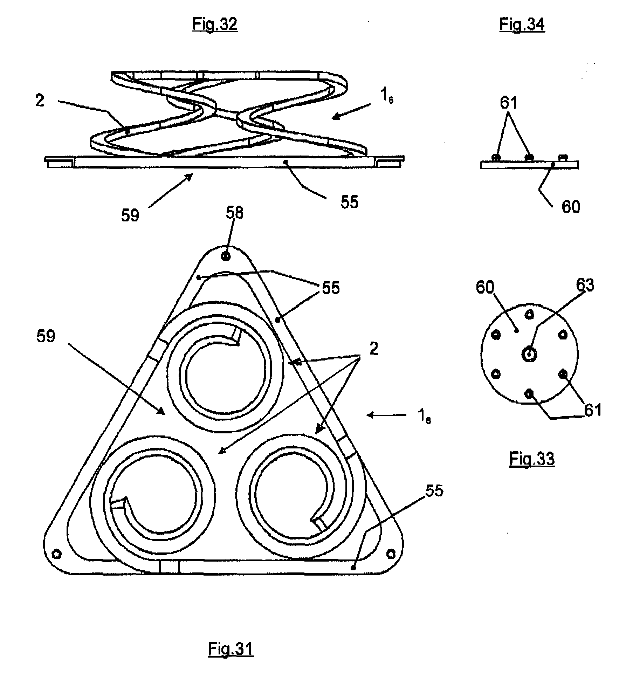

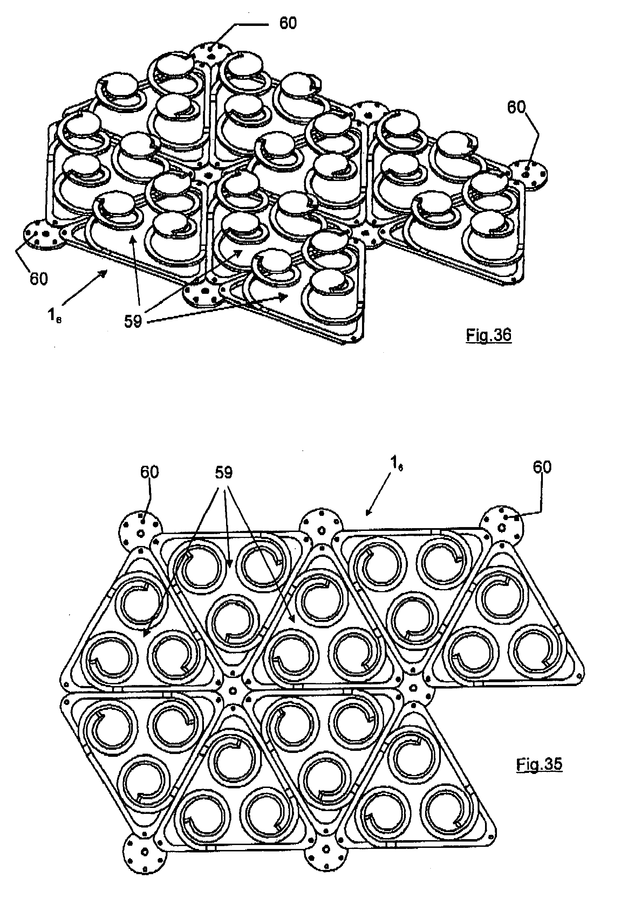

Wie aus den Figuren 31 und 32 ersichtlich, können die Tragarme 55 eines Federelementes 1₆ auch in Form eines Dreiecks 59 angeordnet werden, von denen aus sich die Federglieder 2 in das Innere des Dreiecks erstrecken. Die Ecken der Dreiecke sind mit Löchern 58 versehen, über die sie mit Koppelscheiben 60 nach Figur 33, 34 verbunden werden können. Die Koppelscheiben weisen sechs Zapfen 61 auf, auf die die Löcher von bis zu sechs Dreiecken 59 aufgesteckt werden können. Auf diese Weise können die in den Figuren 35 und 36 wiedergegebenen, verschiebefesten, flächigen Anordnungen von Federelementen 1₆ gebildet werden.

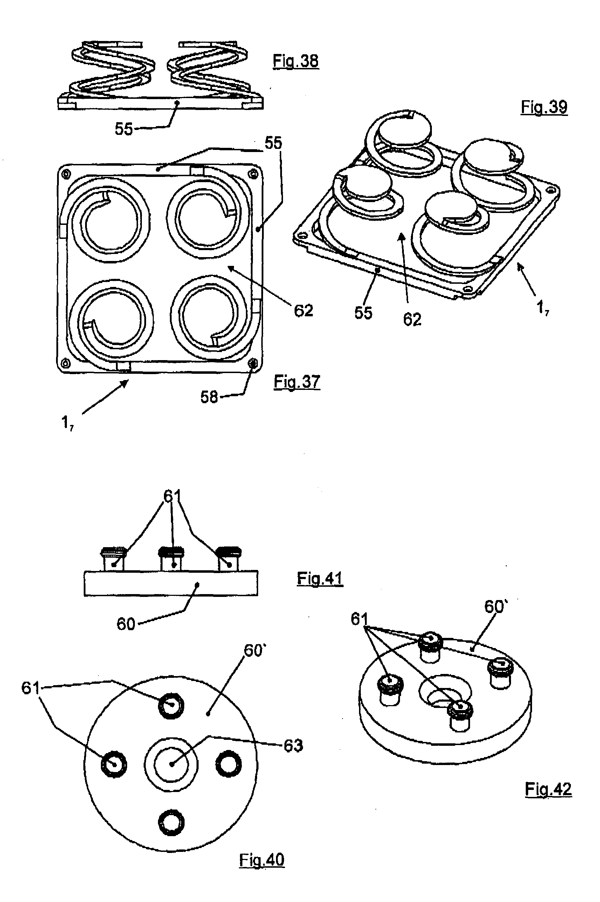

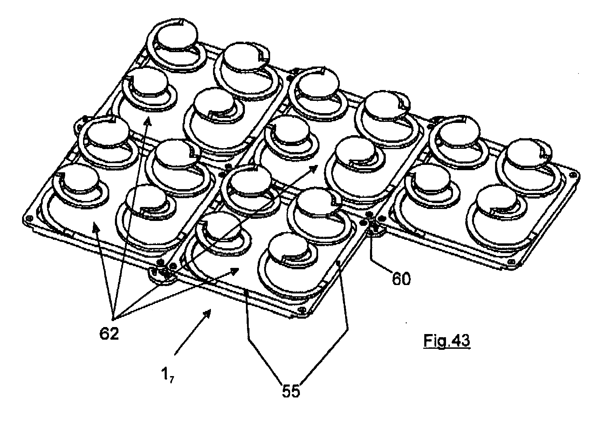

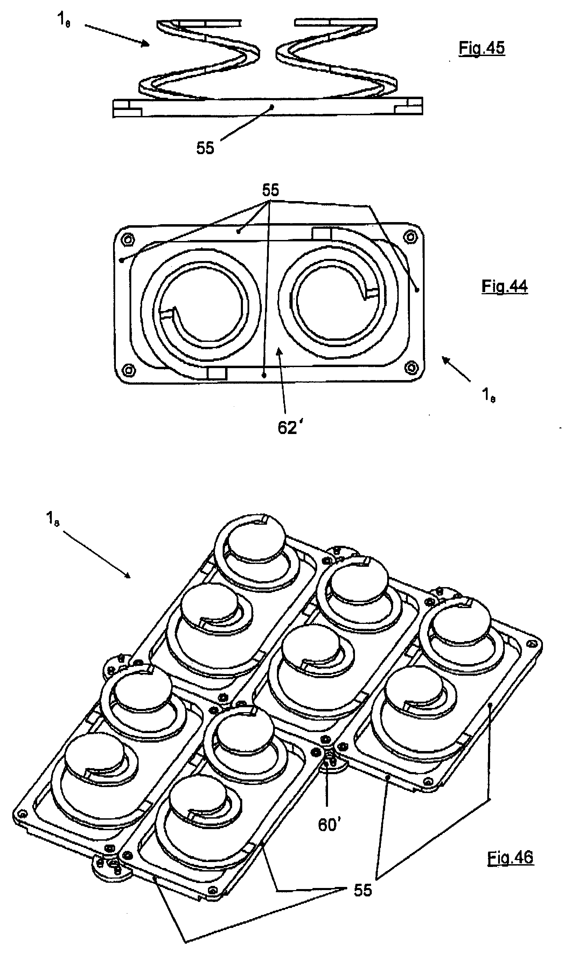

Die vier Tragarme 55 können auch im Viereck 62 - Quadrat, Rechteck. Raute, Trapez - angeordnet werden und ein viereckiges Federelement bilden. In den Figuren 37 bis 39 ist dies für ein quadratisches Federelement 1₇ dargestellt, in den Figuren 44 und 45 für ein rechteckiges Federelement 1₈, in dem die Tragarme 55 in Form eines Rechtecks 62' angeordnet sind. Auch hier erstrecken sich die Federglieder 2₄ in das Innere des Vierecks. Zum Verbinden der Vierecke dienen hier Koppelscheiben 60' mit vier Zapfen 61 wie in den Figuren 40 bis 42 dargestellt. In der Mitte der Koppelscheiben 60, 60' können Löcher 63 angebracht sein, mittels deren die Koppelscheiben und mit ihnen eine flächige Anordnung von Federelementen 1₆. 1₇. 1₈ auf einer Auflagefläche fixiert werden kann, indem sich durch diese Löcher Schrauben erstrecken, die in die Auflagefläche eingeschraubt werden. Den Verbund der quadratischen und rechteckigen Federelemente mit Koppelscheiben zeigen die Figuren 43 und 46 in perspektivischer Ansicht.

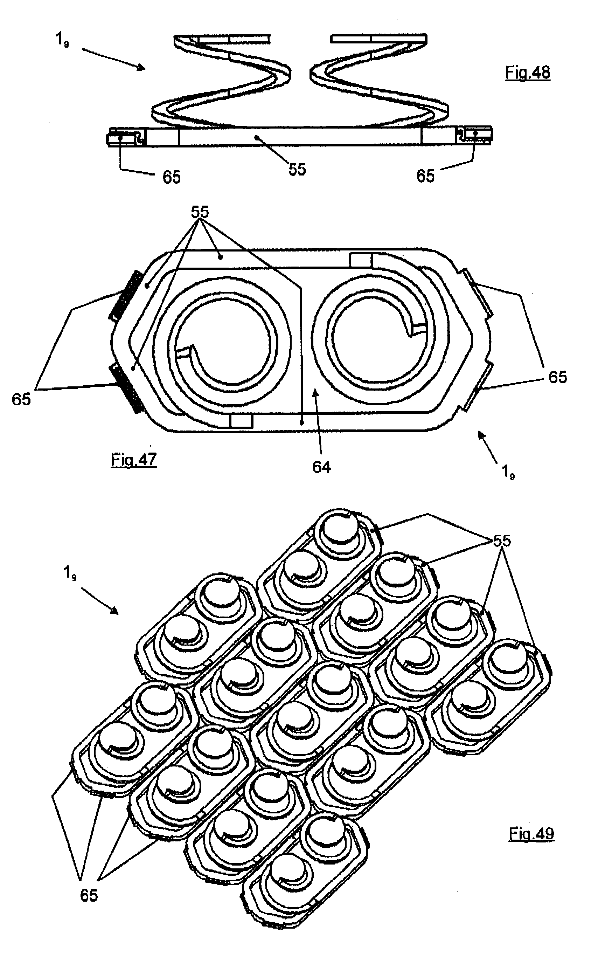

Auch eine Anordnung der Tragarme 55 in einem länglichen Sechseck 64 gemäß den Figuren 47 bis 49 mit je zwei Federgliedern 2₄ ist vorteilhaft. Hierbei kann vorgesehen sein, dass die Federelemente 1₉ mit an den Tragarmen 55 ihrer Schmalseiten angeordneten, ineinandergeifenden Krampen 65 miteinander in Eingriff stehen und die flächige Anordnung von Federelementen beliebiger Form und Größe nach Figur 49 bilden. Die Verbindung über Krampen 65 kann im Übrigen auch an den mit ihren Tragarmen 55 aneinander liegenden Federelementen 1₆,1₇, eingesetzt werden.

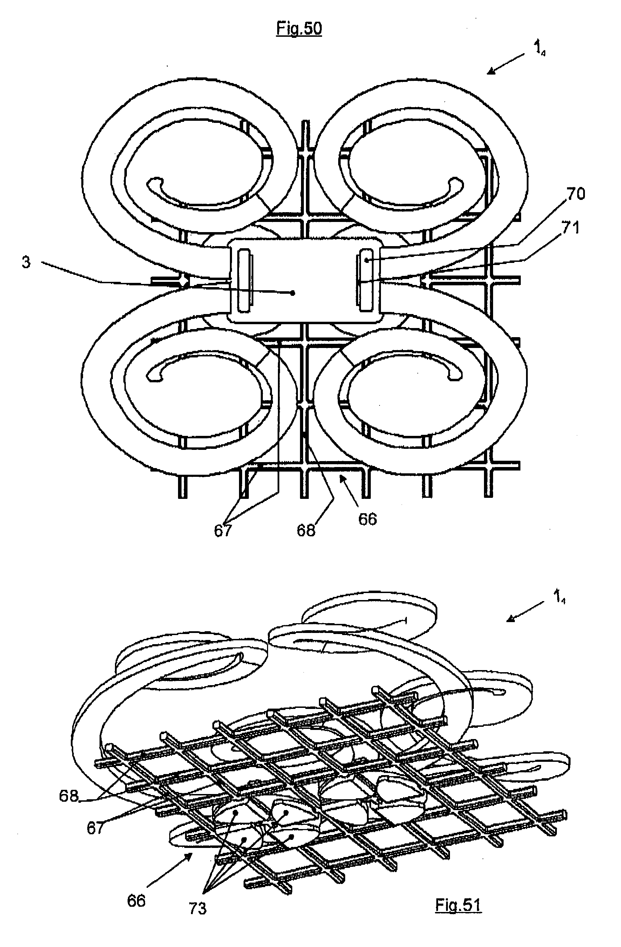

Ein weitere vorteilhafte Möglichkeit zum Verankern der Federelemente besteht darin, ein flächiges Gitter aus Gitterstäben einzusetzen. Das Gitter kann vorteilhaft aus sich in rechten Winkeln kreuzenden Gitterstäben in regelmäßigen Abständen bestehen, die aus Kunststoff gefertigt sind und bei der Herstellung unter Verschweißen zu dem Gitter zusammen gefügt werden. In den Figuren 50 und 51 ist ein Ausführungsbeispiel für ein derartiges Gitter dargestellt.

Wie insbesondere aus der perspektivischen Ansicht von unten in Figur 51 erkennbar, weist das in beliebiger Länge und Breite konfektionierte Gitter 66 längs und quer liegende Gitterstäbe 67 bzw. 68 auf. Auf dieses Gitter werden Federelemente 1 aufgelegt, deren Halteplatte 3 mit zwei Schlitzen 69 versehen ist. Durch diese Schlitze greifen Stege 70 mit harpunenartigen Leisten 71, die an Verankerungsplatten 72 angeordnet sind.

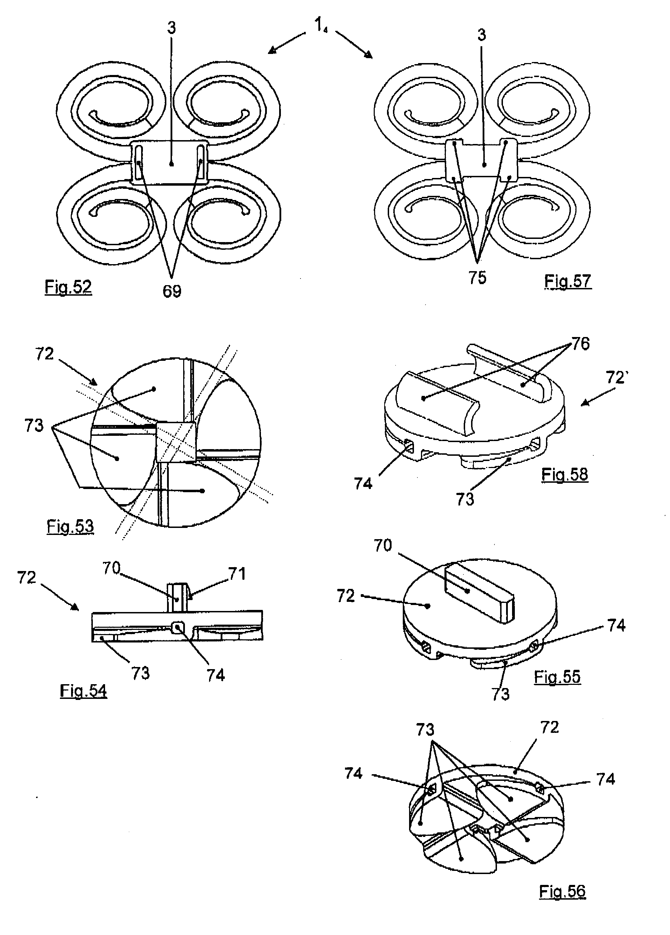

Diese in den Figuren 53 bis 56 näher dargestellten Verankerungsplatten 72 sind auf ihrer Unterseite mit vier um je 90° winkelversetzten Flügeln 73 versehen, die in Nuten 74 enden. Die Verankerungsplatten werden in der in Figur 53 gestrichelt wiedergegebenen Stellung auf einen Kreuzungspunkt des Gitters aufgesetzt und dann um etwa 60° im Uhrzeigersinn gedreht. Dabei gleiten die Flügel 73 unter die Gitterstäbe 67, 68 und fallen in ihrer Endstellung in die Nuten 74, wo sie fixiert werden.

Nach Aufsetzen zweier Verankerungsplatten 72 auf das Gitter 66 kann ein Federelement 1 auf die Stege 70 aufgesetzt werden, wobei sich die harpunenartigen Leisten 71 in den Schlitzen 69 verankern und das Federelement in dieser Stellung fixieren.

In der Ausführungsform der Figur 57 weist das Federelement 1₄ eine durchgehende Halteplatte 3 ohne Schlitze, jedoch mit seitlichen Nocken 75 auf. Die zugehörige Verankerungsplatte 72' (Figur 58) ist auf ihrer Oberseite mit zwei Haltekrampen 76 versehen, die die Halteplatte 3 eines aufgesetzten Federelementes zwischen den Nocken umgreifen, halten und fixieren.

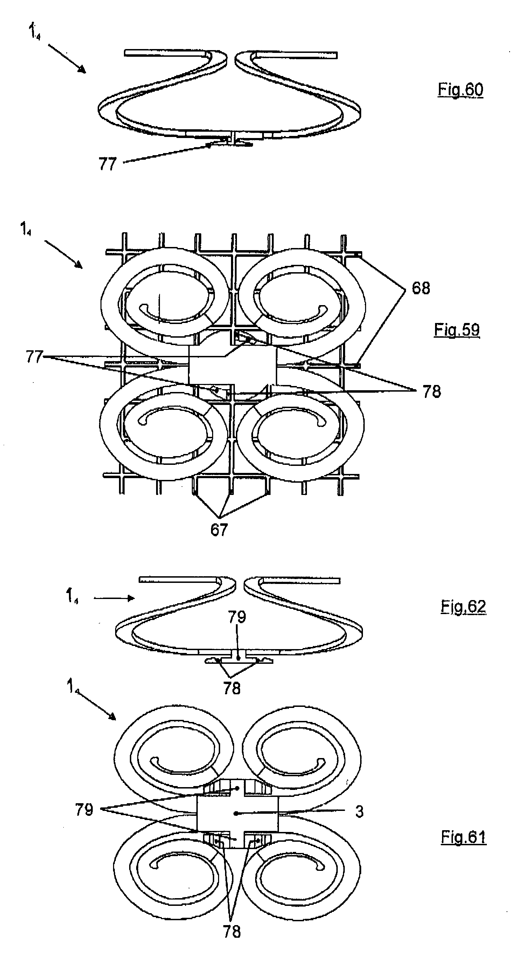

In den Figuren 59 bis 62 sind Ausführungsformen wiedergegeben, bei denen Federelemente ohne Verankerungsplatten auf einem Gitter 66 befestigt werden können. Nach den Figuren 59 und 60 weist die Halteplatte 3 eines Federelementes 1₄ zwei seitlich auskragende, entgegengesetzt orientierte Zungen 77 mit Nuten 78 auf. Das Federelement wird auf einen Gitterstab 67 oder 68 aufgesetzt und im Uhrzeigersinn so weit gedreht, bis der Gitterstab in die Nuten 78 der beiden Zungen 77 einfällt. Dadurch wird das Federelement fixiert.

In den Figuren 61 und 62 ist eine Variante wiedergegeben, bei der die Halteplatte 3 eines Federelementes 1₄ zwei seitliche Doppelzungen 79 aufweist, die ebenfalls mit Nuten 78 versehen sind. Die Zungen sind so lang und die Nuten haben einen solchen Abstand, dass das Federelement auf zwei benachbarte Gitterstäbe 67 oder 68 aufsetzbar ist. Dabei wird zunächst das Federelement mit einer Seite seiner Doppelzungen 79 ganz auf einen Gitterstab aufgeschoben, bis die Doppelzungen auf der anderen Seite unter den benachbarten Gitterstab geschoben werden kann. Dann wird das Federelement so weit zurück gezogen, bis beide Gitterstäbe 67, 68 in die jeweiligen Nuten 78 der Doppelzungen 79 eingreifen.

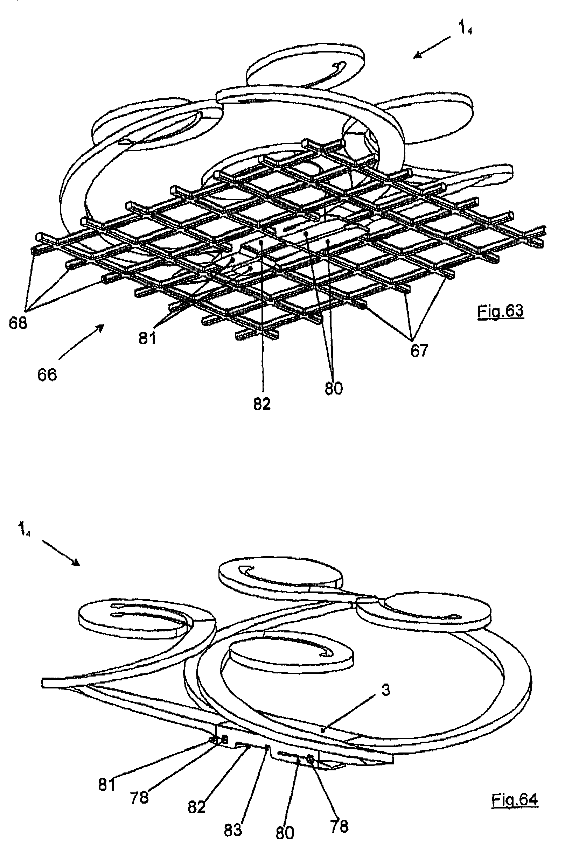

In den Figuren 63 und 64 ist eine Variante der Ausführungsfom der Figuren 61 und 62 dargestellt, bei der ein Federelement am jeweils übernächsten eines Gitterstabes eingeklinkt wird, ein Gitterstab also übersprungen wird. Dies bewirkt eine stabilere Verankerung des Federelementes auf dem Gitter 66.

Wie insbesondere aus Figur 64 erkennbar, sind die Zungen 80 und 81 auf der Unterseite der Halteplatte 3 unterschiedlich lang und zwischen ihnen liegt eine breite Nut 82 mit einer Vertiefungsnut 83. Zum Verankern des Federelementes 1₄ auf dem Gitter 66 wird zunächst die längere Zunge 80 in voller Länge unter einen Gitterstab 67 (oder 68) geschoben. Danach kann die kürzere, gegenüber liegende Zunge 81 in die Lücke zwischen zwei Gitterstäbe abgesenkt werden, wobei ein dazwischen liegender Gitterstab 67 in die Nut 82 eintritt. Nun kann das Federelement wieder zurück gezogen werden, wobei die beiden in den Zungen 80, 81 liegenden Gitterstäbe 67 in die Nuten 78 der Zungen einfallen und es in dieser Stellung sichern. Der dazwischen liegende Gitterstab 67 tritt dabei in die Vertiefungsnut 83 ein und sichert die Lage des Federelementes 1₄ zusätzlich. Wie aus der Untersicht der Figur 63 erkennbar, sind unter der Halteplatte zwei nebeneinander liegende Zungenpaare 80, 81 angeordnet. Dies bietet den Vorteil, dass das Federelement 1₄ gespalten werden kann, wenn ein Federelement mit nur zwei Federgliedern benötigt wird. Beide Federelementteile enthalten dann ein Zungenpaar 80, 81.

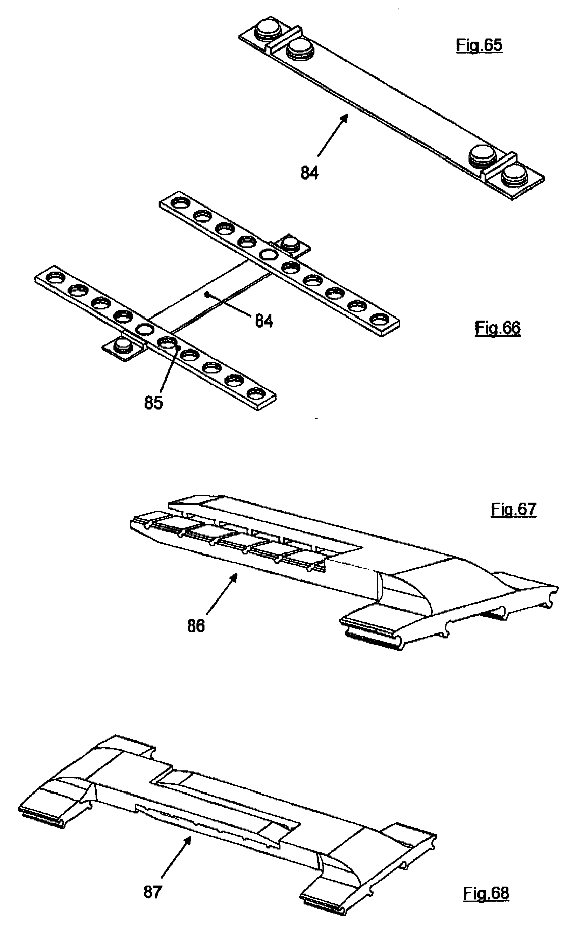

In den Figuren 65 bis 70 ist eine Ausführungsform dargestellt, bei der die Federelemente 1 in gelochten Streifen 85 angeordnet sind, sie weisen Zapfen auf, die in die Löcher der gelochten Streifen einsteckbar sind. Um eine Gitterstruktur zu erreichen, werden die gelochten Streifen durch Abstandhalter 84 auf Distanz gehalten. Auch sie weisen endständige Zapfen auf, die in die Löcher eingreifen können. Dabei sind jeweils zwei endständige Zapfen vorgesehen, um unterschiedliche Abstände der gelochten Streifen zu erreichen.

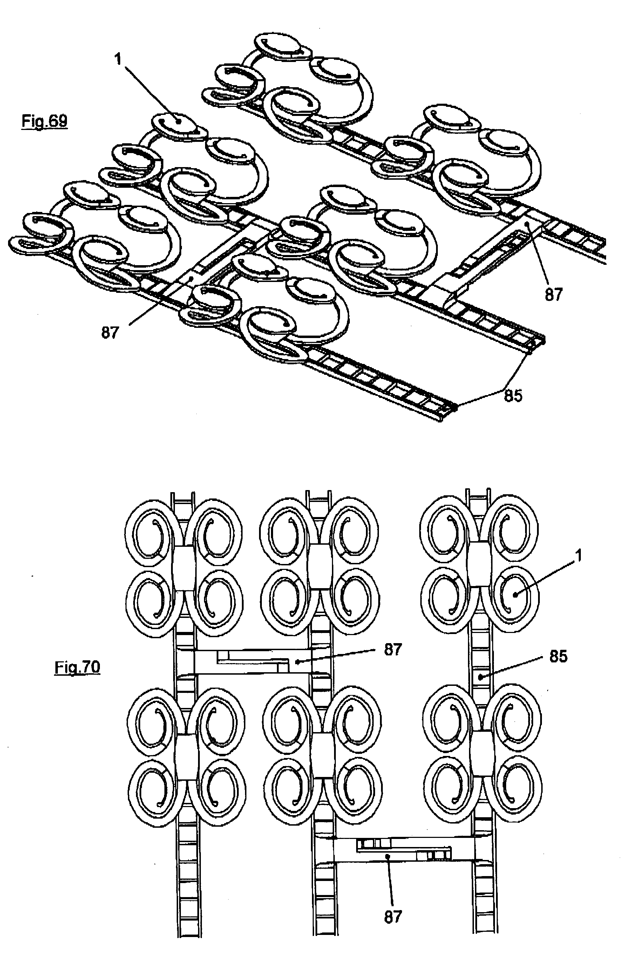

Die Figuren 67 und 68 zeigen einen Abstandhalter 86, 87, der aus zwei in unterschiedlichen Stellungen zusammensteckbaren Teilen besteht. Die Eingriffsnuten an den endständigen Riegeln greifen in die rechteckigen Löcher der in den Figuren 69 und 70 dargestellten gelochten Streifen 85 ein. An den Längsstegen angeordnete Zapfenleisten greifen in unterschiedlichen Längsstellungen in Zapfenschienen des Teilepaares ein.

Die im Zusammenhang mit den Figuren 50 bis 62 beschriebene Verankerung von Federelementen an einem flächigen Gitter kann mit Vorteil auch bei Doppel-Federelementen nach Figur 18 eingesetzt werden, wobei das flächige Gitter zwischen den beiden gedoppelten Federelementen angeordnet ist. Es versteht sich, dass die in den Figuren 25 bis 62 wiedergegebenen Ausführungsformen mit dem Federelemcnt 1₄ gemäß der Figur 24 auch mit Federelementen 1₁, 1₂ oder 1₃ nach den Figuren 1 bis 3 ausgeführt werden können.

### Hezugszahlenliste

- 1: Federelemente (mit Indizes)
- 2: Federglieder (mit Indizes)
- 3, 3', 3", 3^: Halteplatten
- 4, 4', 4": Tragteller
- 5: Tragleiste
- 6: Bajonettverbindung
- 7: Halteglieder
- 8: Halter
- 9: Ausnehmung
- 10, 11: größerer bzw. kleiner Bereich
- 12: Schlitz
- 13: Halter
- 14: Zapfen
- 15: Exzenter
- 16, 17, 18: Auflageflächen des Exzenters
- 19: Stützzapfen am Arm des Federgliedes
- 20: Rampe an der Halteplatte 3
- 21: Schieber auf der Halteplatte 3
- 22: Rasten in der Halteplatte 3
- 23: Arme des Schiebers 21
- 24: Stützelement
- 25: Steckschlitz im Stützelement 24
- 26, 27: Abstände des Steckschlitzes 25
- 28: Auflagefläche des Stützelements 24
- 29: Nasen im Steckschlitz 25
- 30: Lager, 30' Lagerzapfen des Tellers 31
- 31: Teller
- 32, 32', 32": Stifte am Teller 31
- 33: Riegel am Federglied 2₂
- 34: Fahnen am Riegel 33
- 35: Löcher in Halteplatte 3, 3^
- 36: Verzahnung am Federglied 2₂
- 37: Lagerbüchse am Federglied 2₂
- 38: Stützbügel
- 39, 40, 41: Äste des Stützbügels 38
- 42: Drehstellung des Stützbügels 38
- 43: Stütznocken am Federglied
- 44: Stützschrauben am Federglied 2₂
- 45: Doppel-Federelement
- 46: Durchgriffe an den Halteplatte 3, 3^
- 47: Spiralen der Federglieder 2₃
- 48: Stützspiralen
- 49: Tragglieder der Stützspiralen 48
- 50: Rasterung an den Stützspiralen 48
- 51: Stützen mit Treppenstufen
- 52: untere Treppenstufe
- 53: obere Treppenstufe
- 54: Tragglied für Federelement
- 55: Tragarm des Traggliedes 54
- 56: Zentrum des Traggliedes 54
- 57: Koppelglied am Tragglied 54
- 58: Löcher im Koppelglied 54
- 59: dreieckiges Federelement
- 60, 60': Koppelscheibe
- 61: Zapfen auf Koppelglied 57 und auf Koppelscheibe 60, 60'
- 62, 62': viereckiges Federelement
- 63: Loch in der Koppelscheibe 60, 60'
- 64: Sechseckiges Federelement
- 65: Krampen am Tragarm 55
- 66: Gitter
- 67, 68: Gitterstäbe
- 69: Schlitze in Halteplatte 3
- 70: Steg auf der Verankerungsplatte 72
- 71: harpunenartige Leisten am Steg 70
- 72, 72': Verankerungsplatte
- 73: Flügel an Verankerungsplatte 72, 72'
- 74: Nut in der Verankerungsplatte 72, 72'
- 75: Nocken an der Halteplatte 3
- 76: Haltekrampen auf der Verankerungsplatte 72'
- 77: Zungen an einer Halteplatte 3
- 78: Nut auf den Zungen 77
- 79: Doppelzungen
- 80, 81: Zungen an einer Halteplatte 3
- 82: Nut
- 83: Vertiefungsnut
- 84: Abstandhalter
- 85: gelochter Streifen
- 86: Hälfte eines verstellbaren Abstandhalters
- 87: zusammengefügter Abstandhalter

## Patentansprüche

1. Federelement für Polster mit mindestens einem, sich zwischen einer Haltevorrichtung und einem Tragteller seitlich der Haltevorrichtung ansteigend erstreckendem, blattfedcrfiirmigem Federglied, **dadurch gekennzeichnet, dass** das Federglied (2: 2₁, 2₂, 2₃) seine Richtung zwischen Haltevorrichtung (3, 3', 3") und Tragteller (4, 4', 4") wiederholt ändert.

2. Federelement nach Anspruch 1, **dadurch gekennzeichnet, dass** das Federglied (2₁) die Form einer sich um etwa 360° windenden, von seiner Haltevorrichtung (3) aus ansteigenden und sich seitlich von dieser befindlichen Spirale aufweist.

3. Federelement nach Anspruch 1, **dadurch gekennzeichnet, dass** das Federglied (2₂) annähernd zickzackförmig ist und seitlich seiner Haltevorrichtung (3) angeordnet ist.

4. Federelement nach Anspruch 1, **dadurch gekennzeichnet, dass** das Federglied (2₃) annähernd Z-förmig ist und seitlich seiner Haltevorrichtung (3) angeordnet ist.

5. Federelement nach einem der vorstehenden Ansprüche mit einer Einrichtung zum Begrenzen des Durchfederns des mindestens einen Federgliedes beim Belasten, **dadurch gekennzeichnet, dass** Mittel (15/19; 20/21; 24; 31/32; 33/34; 38/43; 44; 48; 51) vorgesehen sind, mittels deren sich Federglieder (2) auf einer ein Federelement (1) tragenden Fläche (5), der Halteplatte (3) oder auf einem dieser Fläche näheren Abschnitt des Federgliedes abstützen.

6. Federelement nach einem der vorstehenden Ansprüche, **dadurch gekennzeichnet, dass** die Federglieder (2) auf einem Tragglied (54) mit mindestens zwei Tragarmen (55) angeordnet sind, die mittels Verbindungslaschen (57) zu einer flächigen Auflagevorrichtung verbindbar sind.

7. Federelement nach einem der vorstehenden Ansprüche, **dadurch gekennzeichnet, dass** die Federelemente (1) auf Tragarmen (55) angeordnet sind, die einen mehreckigen Rahmen (1₁ bis 1₉) bilden.

8. Federelement nach Anspruch 7, **dadurch gekennzeichnet, dass** die mehreckigen Rahmen (1₁ bis 1₉) mittels an ihnen angreifender Krampen (65) zu einer flächigen Auflagevorrichtung verbindbar sind.

9. Federelement nach einem der vorstehenden Ansprüche, **dadurch gekennzeichnet, dass** an die Tragarme (55) anklippsbare Koppelscheiben (60, 60') vorgesehen sind, mittels deren mehreckige Rahmen (1₁ bis 1₉) zu einer flächigen Auflagevorrichtung verbindbar sind.

10. Federelement nach einem der vorstehenden Ansprüche, **dadurch gekennzeichnet, dass** ein Gitter (66) mit sich kreuzenden Gitterstäben (67, 68) vorgesehen ist oder gelochte Streifen (85), die durch Abstandhalter (84/87) auf Abstand fixiert werden können, vorgehalten werden, auf dem Federelemente (1) mittels Verankerungsplatten (72, 72') oder mittels direkt an sie angeformten Halteelemente (77; 79;) befestigt werden können.
